# EUROPEAN PATENT APPLICATION

(11) **EP 4 462 864 A1**
(43) Date of publication of application: **13.11.2024**
(21) Application number: 22918418.9
(22) Date of filing: 22.12.2022
(51) Int. Cl.: H04W 36/00

(54) **CELL RESELECTION METHOD, SLICE GROUP INFORMATION PROCESSING METHOD, TERMINAL AND NETWORK-SIDE DEVICE**

(30) Priority: 07.01.2022 CN 202210016586
(71) Applicant: Datang Mobile Communications Equipment Co., Ltd., Beijing 100085 (CN)
(72) Inventor: MIAO, Jinhua, Beijing 100085 (CN); WANG, Haocheng, Beijing 100085 (CN); NI, Chunlin, Beijing 100085 (CN); HOU, Yunjing, Beijing 100085 (CN)
(74) Representative: Studio Torta S.p.A.
(86) International application number: PCT/CN2022/141055
(87) International publication number: WO 2023/130975

(57) **Abstract**

The present disclosure provides a method for cell reselection, a method for slice group information processing, a user equipment and a network side device. The method for cell reselection includes: obtaining, by a user equipment, slice group information, where the slice group information is used to indicate a mapping relationship between slices and slice groups; and performing, by the user equipment, cell reselection in accordance with the slice group information; the slice group information includes at least one of: information of a slice group supported by a serving TA, information of a slice group supported by at least two TAs in an RA, information of a slice group supported by at least one neighboring TA of an RA, information of a serving cell slice group supported by a neighboring cell, or information of a slice group supported by a neighboring cell.

## Description

### CROSS-REFERENCE TO RELATED APPLICATION

This application claims a priority to Chinese patent application No.202210016586.5 filed on January 07, 2022, which is incorporated in its entirety by reference herein.

### TECHNICAL FIELD

The present disclosure relates to the technical field of communications, in particular to a method for cell reselection, a method for slice group information processing, a user equipment and a network side device.

### BACKGROUND

Network slice is a service-oriented resource encapsulation concept. One kind of network slice is uniquely identified through network slice selection assistant information (Network Slice Selection Assistant Identity, NSSAI), and corresponds to a type of resource configuration. During the slice registration, NSSAI information requested to be registered by a user equipment (Requested NSSAI) is transmitted through Message 5 to an access network side, and the user equipment is constrained to register at most 8 single NSSAIs (Single NSSAI, S-NSSAI) each time. A core network generates allowed NSSAIs and rejected NSSAIs for the user equipment in accordance with user equipment subscription information, Requested NSSAIs of the user equipment, information of slices supported locally, and local policy.

The user equipment may preconfigure NSSAIs, or obtain configured NSSAIs (Configured NSSAI) from the core network, and this configuration is unique for a Public Land Mobile Network (PLMN). When a certain PLMN configured for the user equipment has no configured NSSAI, default NSSAI (Default NSSAI) information is used.

In the definition about frequency priority level for slice-based cell reselection, a concept "slice group" has been introduced, considering such issues as security and signaling overhead. A network side notifies the user equipment of a mapping relationship between slices and slice groups through a Non-Access Stratum (NAS) message, i.e., in an encrypted mode. Then, the network side notifies, through broadcasting (an unencrypted mode), information of slice groups supported by a serving cell and priority levels of the slice groups at different frequencies.

Currently, the definition of slice group is valid in a tracking area (Tracking Area, TA). The mapping relationships between slice groups and slices may be different in different TAs. For example, in TA0, slice group 0 is defined to include slice 1 and slice 2; in TA1, slice group 0' is defined to include slice 1, slice 2 and slice 3; and in TA2, slice group 0" is defined to include slice 0 and slice 2. When the user equipment is located at a boundary of a TA, the user equipment can not obtain information of slice groups of a neighboring TA; in addition, the definitions of slice groups for different TAs may be different, so the user equipment can not perform a cell reselection process in accordance with information of slice groups of the serving TA.

### SUMMARY

Embodiments of the present disclosure are to provide a method for cell reselection, a method for slice group information processing, a user equipment, and a network side device, so as to solve the problem in the related technologies that the user equipment at the boundary of the TA can not perform the cell reselection process in accordance with the information of the slice groups of the serving TA.

To solve the above problem, embodiments of the present disclosure provide a method for cell reselection, including: obtaining, by a user equipment, slice group information, where the slice group information is used to indicate a mapping relationship between slices and slice groups; and performing, by the user equipment, cell reselection in accordance with the slice group information; where the slice group information includes at least one of: information of a slice group supported by a serving tracking area TA, information of a slice group supported by at least two TAs in a registration area RA, information of a slice group supported by at least one neighboring TA of an RA, information of a serving cell slice group supported by a neighboring cell, or information of a slice group supported by a neighboring cell.

In a possible embodiment of the present disclosure, the obtaining, by the user equipment, the slice group information includes: receiving, by the user equipment, a registration accept message from a network side device, where the registration accept message carries the slice group information.

In a possible embodiment of the present disclosure, the obtaining, by the user equipment, the slice group information includes: receiving, by the user equipment, a broadcast message from a network side device, where the broadcast message carries the slice group information.

In a possible embodiment of the present disclosure, the performing, by the user equipment, the cell reselection in accordance with the slice group information includes: performing, by the user equipment, the cell reselection in accordance with the slice group information and slice group priority information.

In a possible embodiment of the present disclosure, the method for cell reselection further includes: receiving, by the user equipment, a non-access stratum NAS message or a broadcast message, where the NAS message or the broadcast message carries slice group priority information for each TA, and the slice group priority information includes priority information about a slice group at each frequency.

In a possible embodiment of the present disclosure, the performing, by the user equipment, the cell reselection in accordance with the slice group information and the slice group priority information includes: selecting, by the user equipment, a first slice group including a first slice that is supported by the user equipment and has a highest priority level, from information of a slice group supported by a TA to which a neighboring cell belongs, information of a serving cell slice group supported by a neighboring cell or information of a slice group supported by a neighboring cell, in accordance with the first slice; and performing, by the user equipment, measurement in accordance with the first slice group and performing the cell reselection in accordance with a measurement result.

In a possible embodiment of the present disclosure, before the performing, by the user equipment, the measurement in accordance with the first slice group and performing the cell reselection in accordance with the measurement result, the method for cell reselection further includes: determining, by the user equipment, priority information about the first slice group at each frequency.

In a possible embodiment of the present disclosure, the performing, by the user equipment, the measurement in accordance with the first slice group and performing the cell reselection in accordance with the measurement result includes: performing, by the user equipment, the measurement at a frequency with a highest priority level, in accordance with a priority level of the first slice group at each frequency, and performing the cell reselection in accordance with the measurement result; and in a case that there is no cell meeting a condition at the frequency with the highest priority level, performing the measurement at corresponding frequencies in a descending order of priority levels until the cell reselection is completed.

In a possible embodiment of the present disclosure, the determining, by the user equipment, the priority information about the first slice group at each frequency includes: assigning, by the user equipment, a value to a priority level of the first slice group at each frequency, in accordance with slice group priority information for the TA to which the neighboring cell belongs, or slice group priority information for the serving TA, or highest-priority information from slice group priority information for the TA to which the neighboring cell belongs and slice group priority information for the serving TA.

The present disclosure provides in some embodiments a method for slice group information processing, including: transmitting, by a network side device, slice group information to a user equipment, where the slice group information is used to indicate a mapping relationship between slices and slice groups; where the slice group information includes at least one of: information of a slice group supported by a serving tracking area TA, information of a slice group supported by at least two TAs in a registration area RA, information of a slice group supported by at least one neighboring TA of an RA, information of a serving cell slice group supported by a neighboring cell of a serving cell, or information of a slice group supported by a neighboring cell of a serving cell.

In a possible embodiment of the present disclosure, the transmitting, by the network side device, the slice group information to the user equipment includes: transmitting, by the network side device, a registration accept message to the user equipment in accordance with a registration request message from the user equipment, where the registration accept message carries the slice group information.

In a possible embodiment of the present disclosure, the transmitting, by the network side device, the slice group information to the user equipment includes: transmitting, by the network side device, a broadcast message, where the broadcast message carries the slice group information.

In a possible embodiment of the present disclosure, in the case that the slice group information includes the information of the serving cell slice group supported by the neighboring cell of the serving cell, the method for slice group information processing further includes: obtaining, by the network side device, information of a slice supported by the neighboring cell or information of a neighboring cell slice group supported by the neighboring cell, through an Xn interface or an NG interface; and mapping, by the network side device, the information of the slice supported by the neighboring cell to a serving cell slice group so as to obtain the information of the serving cell slice group supported by the neighboring cell, or, remapping, by the network side device, the information of the neighboring cell slice group supported by the neighboring cell so as to obtain the information of the serving cell slice group supported by the neighboring cell.

In a possible embodiment of the present disclosure, the method for slice group information processing further includes: transmitting, by the network side device, a non-access stratum NAS message or a broadcast message to the user equipment, where the NAS message or the broadcast message carries slice group priority information for each TA, and the slice group priority information includes priority information about a slice group at each frequency.

The present disclosure provides in some embodiments a device for cell reselection, including: an information obtaining unit, configured to obtain slice group information, where the slice group information is used to indicate a mapping relationship between slices and slice groups; and a reselection unit, configured to perform cell reselection in accordance with the slice group information; where the slice group information includes at least one of: information of a slice group supported by a serving tracking area TA, information of a slice group supported by at least two TAs in a registration area RA, information of a slice group supported by at least one neighboring TA of an RA, information of a serving cell slice group supported by a neighboring cell, or information of a slice group supported by a neighboring cell.

The present disclosure provides in some embodiments a user equipment, including a memory, a transceiver and a processor; where the memory is configured to store a computer program, and the transceiver is configured to transmit and receive data under control of the processor; where the processor is configured to read the computer program in the memory to perform following operation: obtaining slice group information, where the slice group information is used to indicate a mapping relationship between slices and slice groups; and performing cell reselection in accordance with the slice group information; where the slice group information includes at least one of: information of a slice group supported by a serving tracking area TA, information of a slice group supported by at least two TAs in a registration area RA, information of a slice group supported by at least one neighboring TA of an RA, information of a serving cell slice group supported by a neighboring cell, or information of a slice group supported by a neighboring cell.

In a possible embodiment of the present disclosure, the processor is further configured to read the computer program in the memory to perform following operation: receiving a registration accept message from a network side device, where the registration accept message carries the slice group information.

In a possible embodiment of the present disclosure, the processor is further configured to read the computer program in the memory to perform following operation: receiving a broadcast message from a network side device, where the broadcast message carries the slice group information.

In a possible embodiment of the present disclosure, the processor is further configured to read the computer program in the memory to perform following operation: receiving a non-access stratum NAS message or a broadcast message, where the NAS message or the broadcast message carries slice group priority information for each TA, and the slice group priority information includes priority information about a slice group at each frequency.

In a possible embodiment of the present disclosure, the processor is further configured to read the computer program in the memory to perform following operation: selecting a first slice group including a first slice that is supported by the user equipment and has a highest priority level, from information of a slice group supported by a TA to which a neighboring cell belongs, information of a serving cell slice group supported by a neighboring cell or information of a slice group supported by a neighboring cell, in accordance with the first slice; and performing measurement in accordance with the first slice group and performing the cell reselection in accordance with a measurement result.

In a possible embodiment of the present disclosure, the processor is further configured to read the computer program in the memory to perform following operation: determining priority information about the first slice group at each frequency.

In a possible embodiment of the present disclosure, where the processor is further configured to read the computer program in the memory to perform following operation: performing the measurement at a frequency with a highest priority level, in accordance with a priority level of the first slice group at each frequency, and performing the cell reselection in accordance with the measurement result; and in a case that there is no cell meeting a condition at the frequency with the highest priority level, performing the measurement at corresponding frequencies in a descending order of priority levels until the cell reselection is completed.

In a possible embodiment of the present disclosure, the processor is further configured to read the computer program in the memory to perform following operation: assigning a value to a priority level of the first slice group at each frequency, in accordance with slice group priority information for the TA to which the neighboring cell belongs, or slice group priority information for the serving TA, or highest-priority information from slice group priority information for the TA to which the neighboring cell belongs and slice group priority information for the serving TA.

The present disclosure provides in some embodiments a device for slice group information processing, including: a transmission unit, configured to transmit slice group information to a user equipment, where the slice group information is used to indicate a mapping relationship between slices and slice groups; where the slice group information includes at least one of: information of a slice group supported by a serving tracking area TA, information of a slice group supported by at least two TAs in a registration area RA, information of a slice group supported by at least one neighboring TA of an RA, information of a serving cell slice group supported by a neighboring cell of a serving cell, or information of a slice group supported by a neighboring cell of a serving cell.

The present disclosure provides in some embodiments a network side device, including a memory, a transceiver and a processor, where the memory is configured to store a computer program, and the transceiver is configured to transmit and receive data under control of the processor; where the processor is configured to read the computer program in the memory to perform following operation: transmitting slice group information to a user equipment, where the slice group information is used to indicate a mapping relationship between slices and slice groups; where the slice group information includes at least one of: information of a slice group supported by a serving tracking area TA, information of a slice group supported by at least two TAs in a registration area RA, information of a slice group supported by at least one neighboring TA of an RA, information of a serving cell slice group supported by a neighboring cell of a serving cell, or information of a slice group supported by a neighboring cell of a serving cell.

In a possible embodiment of the present disclosure, the processor is further configured to read the computer program in the memory to perform following operation: transmitting a registration accept message to the user equipment in accordance with a registration request message from the user equipment, where the registration accept message carries the slice group information.

In a possible embodiment of the present disclosure, the processor is further configured to read the computer program in the memory to perform following operation: transmitting a broadcast message, where the broadcast message carries the slice group information.

In a possible embodiment of the present disclosure, the processor is further configured to read the computer program in the memory to perform following operation: in the case that the slice group information includes the information of the serving cell slice group supported by the neighboring cell of the serving cell, obtaining information of a slice supported by the neighboring cell or information of a neighboring cell slice group supported by the neighboring cell, through an Xn interface or an NG interface; and mapping the information of the slice supported by the neighboring cell to a serving cell slice group so as to obtain the information of the serving cell slice group supported by the neighboring cell, or remapping the information of the neighboring cell slice group supported by the neighboring cell so as to obtain the information of the serving cell slice group supported by the neighboring cell.

In a possible embodiment of the present disclosure, the processor is further configured to read the computer program in the memory to perform following operation: transmitting a non-access stratum NAS message or a broadcast message to the user equipment, where the NAS message or the broadcast message carries slice group priority information for each TA, and the slice group priority information includes priority information about a slice group at each frequency.

The present disclosure provides in some embodiments a processor readable storage medium having a computer program stored thereon. The computer program is executed by a processor so as to implement the above-mentioned method.

The above solutions of the present disclosure at least have the following beneficial effects.

According to the method for cell reselection, the method for slice group information processing, the user equipment and the network side device in the embodiments of the present disclosure, the user equipment obtains in advance at least one of the information of the slice group supported by the serving TA, the information of the slice group supported by the at least two TAs in the registration area RA, the information of the slice group supported by the at least one neighboring TA of the RA, the information of the serving cell slice group supported by the neighboring cell, or the information of the slice group supported by the neighboring cell, and performs the cell reselection in accordance with the obtained slice group information and the slice group priority information in the case that the cell reselection needs to be performed, solving the problem that cell reselection can not be performed which is caused by the fact that slice groups have different definitions in different TAs and the user equipment can not obtain information of slice groups of other TA.

### BRIEF DESCRIPTION OF THE DRAWINGS

Fig. 1 is a block diagram of a radio communication system to which embodiments of the present disclosure may be applied;
Fig. 2 is a flow chart of a method for cell reselection according to embodiments of the present disclosure;
Fig. 3 is a schematic diagram of distribution of TAs in a method for cell reselection according to embodiments of the present disclosure;
Fig. 4 is a schematic diagram of distribution of cells in a method for cell reselection according to embodiments of the present disclosure;
Fig. 5 is a schematic diagram of a first example according to embodiments of the present disclosure;
Fig. 6 is a flow chart of a method for slice group information processing according to embodiments of the present disclosure;
Fig. 7 is a schematic diagram of a third example according to embodiments of the present disclosure;
Fig. 8 is a schematic diagram of a device for cell reselection according to embodiments of the present disclosure;
Fig. 9 is a schematic diagram of a user equipment according to embodiments of the present disclosure;
Fig. 10 is a schematic diagram of a device for slice group information processing according to embodiments of the present disclosure; and
Fig. 11 is a schematic diagram of a network side device according to embodiments of the present disclosure.

### DETAILED DESCRIPTION

In order to make technical issues to be addressed, technical solutions, and advantages of the present disclosure clearer, detailed descriptions are provided in conjunction with drawings and embodiments of the present disclosure.

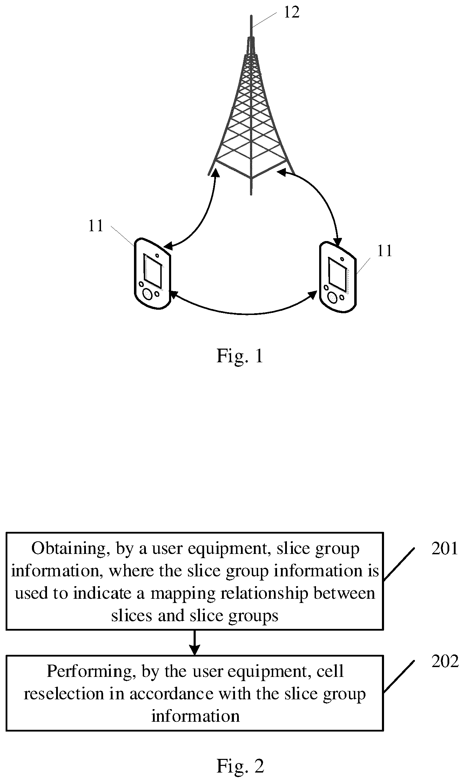

Fig. 1 illustrates a block diagram of a radio communication system to which embodiments of the present disclosure may be applied. The radio communication system includes a terminal 11 and a network side device 12. The terminal 11 may also be referred to as a terminal device or a user equipment (User Equipment, UE). It should be noted that in the embodiments of the present disclosure, the specific type of the terminal 11 is not limited. The network side device 12 may be a base station or a core network, and it should be noted that in the embodiments of the present disclosure, the base station in the NR system is only taken as an example, and the specific type of the base station is not limited.

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of the present disclosure refers to two or more than two, and other words for expressing quantities are similar to it.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

The technical solutions in the embodiments of the present disclosure may be applied to various systems, especially 5^{th}-Generation (5G) systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present disclosure may refers to a device that provides voice and/or data connectivity to a user, a handheld device with a wireless connection function, or other processing devices connected to a wireless modem. In different systems, the name of the terminal device may be different. For example, in 5G systems, the terminal device may be referred to as a user equipment (User Equipment, UE). A wireless terminal device may communicate with one or more core networks (Core Network, CN) through a radio access network (Radio Access Network, RAN). The wireless terminal device may be a mobile terminal device, such as a mobile phone (or referred to as a "cellular" phone) or a computer with a mobile terminal device, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal device may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

The network device involved in the embodiments of the present disclosure may be a base station, and the base station may have multiple cells providing services for terminals. According to different application scenarios, the base station may also be referred to as an access point, or may be a device in an access network that communicates with wireless terminal devices through one or more sectors on air interfaces, or may have other names. The network device may be configured to exchange received air frames and Internet protocol (Internet Protocol, IP) packets, serving as a router between the wireless terminal devices and rest of the access network, where the rest of the access network may include an Internet Protocol (IP) communication network. The network device may also coordinate attribute management of air interfaces. For example, the network device involved in the embodiments of the present disclosure may be a network device (Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2D-MIMO, 3D-MIMO, FD-MIMO, or Massive MIMO, or may be diversity transmission, or precoding transmission, or beamforming transmission, etc.

As shown in Fig. 2, the present disclosure provides in some embodiments a method for cell reselection, which includes following steps.

Step 201 includes: obtaining, by a user equipment, slice group information, where the slice group information is used to indicate a mapping relationship between slices and slice groups.

Step 202 includes: performing, by the user equipment, cell reselection in accordance with the slice group information.

The slice group information includes at least one of: information of a slice group supported by a serving tracking area TA, information of a slice group supported by at least two TAs in a registration area (Registration Area, RA), information of a slice group supported by at least one neighboring TA of an RA, information of a serving cell slice group supported by a neighboring cell, or information of a slice group supported by a neighboring cell.

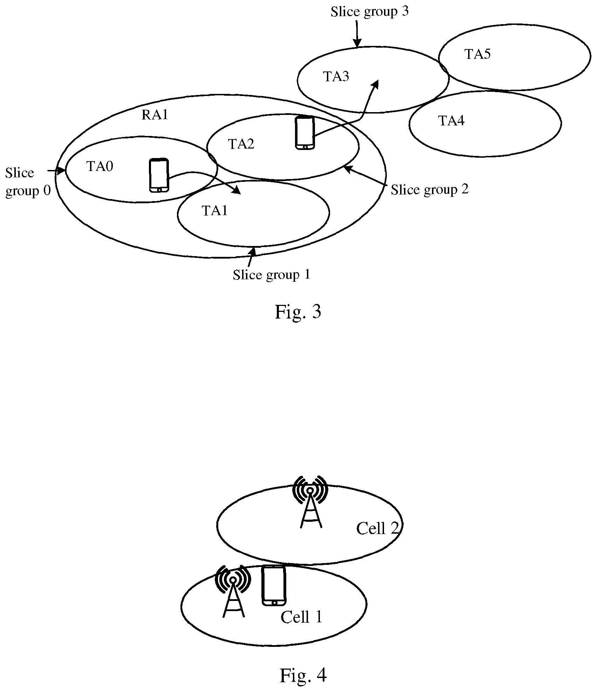

In a possible embodiment of the present disclosure, as shown in Fig. 3, the serving TA for the user equipment is TA0, the RA for the user equipment is RA1, and the at least one neighboring TA of the RA for the user equipment is TA3. The slice group information obtained by the user equipment includes at least one of: information about slice group 0 supported by TA0, information about slice group 1 supported by TA1 in RA1, information about slice group 2 supported by TA2 in RA1, or information about slice group 3 supported by TA3.

When the user equipment moves to a boundary of the TA, e.g., the user equipment moving from TA0 to TA1, the user equipment performs a cell reselection process in accordance with the information about the slice group supported by TA0 and the information about the slice group supported by TA1 that are stored, and slice group priority information for TA0 and slice group priority information for TA1.

When the user equipment moves to a boundary of the RA, e.g., the user equipment moving from TA2 to TA3, the user equipment performs cell reselection in accordance with the information about the slice group supported by TA2 and the information about the slice group supported by TA3 that are stored, and slice group priority information for TA2 and slice group priority information for TA3.

In a possible embodiment of the present disclosure, as shown in Fig. 4, the serving cell for the user equipment is Cell 1, and the neighboring cell is Cell 2; the slice group information obtained by the user equipment includes: information of a slice group supported by Cell 2 (in the case that the definition of slice group for the neighboring cell is consistent with that for the serving cell), or information of a slice group of Cell 1 supported by Cell 2 (in the case that the definition of slice group for the neighboring cell is inconsistent with that for the serving cell).

It should be appreciated that, in the case that the definition of slice group for the neighboring cell is inconsistent with that for the serving cell, a network side device further needs to perform a remapping step, i.e., mapping a slice or slice group supported by the neighboring cell to the definition of slice group for the serving cell in a remapping manner. For example, the remapping step specifically includes: mapping, by the network side device, the information of the slice supported by the neighboring cell to a serving cell slice group so as to obtain the information of the serving cell slice group supported by the neighboring cell, or, remapping, by the network side device, the information of the neighboring cell slice group supported by the neighboring cell so as to obtain the information of the serving cell slice group supported by the neighboring cell.

In at least one embodiment of the present disclosure, step 201 includes: receiving, by the user equipment, a registration accept message from a network side device, where the registration accept message carries the slice group information.

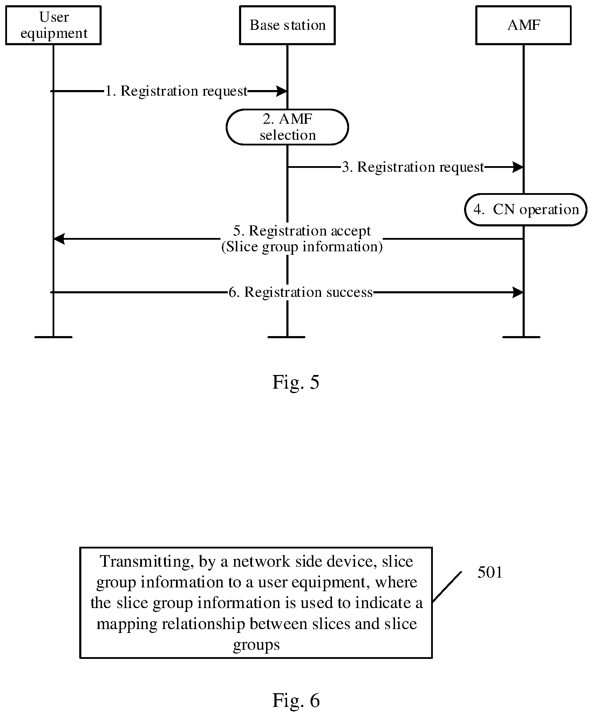

In a first example, as shown in Fig. 5, the user equipment obtains the slice group information during the registration.

Step 1: when the user equipment is powered on or the RA is updated, a registration request message is transmitted. In a possible embodiment of the present disclosure, the registration request message may include information such as: information/capability indicating that the user equipment requests to support cell selection on the basis of a slice group, or information/capability indicating that the user equipment supports a slice group.

Step 2: a base station side performs Access and Mobility Management Function (AMF) selection.

Step 3: the base station transmits the registration request message to the selected AMF.

Step 4: the AMF performs a series of operations, e.g., authentication.

Step 5: the AMF transmits a registration accept message to the user equipment, and the registration accept message carries the slice group information, which includes at least one of:
information of a slice group of a current TA, including a mapping relationship between slices and slice groups; as shown in Fig. 3, when the user equipment is located in TA0 and the registration is performed in TA0, information of slice groups of the current TA is transmitted by the AMF;
information of a slice group of parts of, or all of, TAs in a current RA, including a mapping relationship between slices and slice groups; as shown in Fig. 3, information of slice groups of all TAs in the entire RA, including TA0 to TA2, is transmitted by the AMF to the user equipment; or,
information of a slice group of a neighboring TA of the current RA, e.g., information of slice groups of TA3; in a possible embodiment of the present disclosure, the AMF may determine, in accordance with a movement trajectory of the user equipment or network information or user equipment historical information (including information about RA/TA where the user equipment camped), a neighboring TA whose slice group information is to be transmitted to the user equipment.

Step 6: the user equipment transmits a registration success message.

Step 7: the user equipment performs slice-based cell reselection in accordance with the obtained slice group information in the case that the cell reselection needs to be performed.

For example, the user equipment selects a slice group with a highest priority level. Then, the user equipment determines, based on information of the selected slice group, carriers supporting the slice group (which are defined herein as first carrier list), and determines priority levels of carriers in the first carrier list as priority levels of the slice group on the carriers. The user equipment performs measurement on a carrier with a higher priority level in accordance with the priority levels of the carriers, and selects a cell (i.e., a first cell) with highest signal quality on the carrier. When the first cell supports the first slice group selected by the user equipment, the user equipment reselects to the first cell. Otherwise, the user equipment may measure the other frequencies in the first carrier list and performs cell reselection process.

In another possible embodiment of the present disclosure, step 201 includes: receiving, by the user equipment, a broadcast message from a network side device, where the broadcast message carries the slice group information.

In a possible embodiment of the present disclosure, the network side device is the serving cell for the user equipment. In other words, the serving cell obtains information of a slice or information of a slice group supported by the neighboring cell, and maps the information of the slice to information of a slice group of the serving cell, or remaps the information of the slice group to information of a slice group of the serving cell in the case that the definition of slice group for the neighboring cell is inconsistent with that for the serving cell, or determines the information of the slice group supported by the neighboring cell in the case that the definition of slice group for the neighboring cell is consistent with that for the serving cell. Further, the serving cell transmits the broadcast message, and the broadcast message carries the slice group information obtained through mapping or remapping.

In another possible embodiment of the present disclosure, step 202 includes: performing, by the user equipment, the cell reselection in accordance with the slice group information and slice group priority information.

Correspondingly, in yet another possible embodiment of the present disclosure, the method for cell reselection further includes: receiving, by the user equipment, a non-access stratum NAS message or a broadcast message, where the NAS message or the broadcast message carries slice group priority information for each TA, and the slice group priority information includes priority information about a slice group at each frequency.

In a possible embodiment of the present disclosure, the performing, by the user equipment, the cell reselection in accordance with the slice group information and the slice group priority information includes:
selecting, by the user equipment, a first slice group including a first slice that is supported by the user equipment and has a highest priority level, from information of a slice group supported by a TA to which a neighboring cell belongs, information of a serving cell slice group supported by a neighboring cell or information of a slice group supported by a neighboring cell, in accordance with the first slice; and
performing, by the user equipment, measurement in accordance with the first slice group and performing the cell reselection in accordance with a measurement result.

Before the performing, by the user equipment, the measurement in accordance with the first slice group and performing the cell reselection in accordance with the measurement result, the method for cell reselection further includes: determining, by the user equipment, priority information about the first slice group at each frequency.

Correspondingly, the performing, by the user equipment, the measurement in accordance with the first slice group and performing the cell reselection in accordance with the measurement result includes: performing, by the user equipment, the measurement at a frequency with a highest priority level, in accordance with a priority level of the first slice group at each frequency, and performing the cell reselection in accordance with the measurement result; and in a case that there is no cell meeting a condition at the frequency with the highest priority level, performing the measurement at corresponding frequencies in a descending order of priority levels until the cell reselection is completed.

In a possible embodiment of the present disclosure, the determining, by the user equipment, the priority information about the first slice group at each frequency includes: assigning, by the user equipment, a value to a priority level of the first slice group at each frequency, in accordance with slice group priority information for the TA to which the neighboring cell belongs, or slice group priority information for the serving TA, or highest-priority information from slice group priority information for the TA to which the neighboring cell belongs and slice group priority information for the serving TA.

In a second example, the user equipment performs cell reselection.

The user equipment obtains a TA to which the neighboring cell belongs. The TA to which the neighboring cell belongs is obtained as follows: the user equipment reads the broadcast message from the neighboring cell to obtain a Tracking Area Code (TAC) of the neighboring cell, or the serving cell broadcasts the TA to which the neighboring cell belongs. For example, when the user equipment camps on Cell 1, it reads the broadcast message from Cell 2 so as to obtain a TA to which Cell 2 belongs. Or, the user equipment reads a broadcast message from Cell 1, and Cell 1 broadcasts the TA to which the neighboring Cell 2 belongs. In this way, the user equipment determines that Cell 2 belongs to TA3.

The user equipment selects a slice group with a highest priority level (i.e., the first slice group). For example, the user equipment supports Slice A, Slice B and Slice C, and Slice A has a highest priority level. It is assumed that Slice A is mapped to Slice group 1 in TA2, and mapped to Slice group 2' in TA3.

After determining the neighboring cells, the user equipment allocates priority levels for the first slice group at different frequencies (which may also be referred to as different frequencies such as F1 and F2). There are three schemes as follows.

Scheme 1: when the user equipment determines that Cell 2 belongs to TA3, it assigns values in accordance with priority levels of TA3. For example, a priority level of the first slice group at F1 is set as 6, and a priority level of the first slice group at F2 is set as 3. At this time, the priority level at F1 is higher, so the user equipment may camp on a cell at F1 as long as there is the cell at F1 that meets a condition. Otherwise, the user equipment may perform detection on F2.

Scheme 2: when the user equipment can not determine a TA to which Cell 2 belongs, the user equipment assigns values in accordance with priority levels of the serving TA. For example, when priority levels of carriers capable of being obtained by the user equipment for the slice group in TA2 are 5 at F1 and 3 at F2, the priority level of the first slice group at F1 is set as 5, and the priority level of the first slice group at F2 is set as 3. At this time, the priority level at F1 is higher, so the user equipment may camp on a cell at F1 as long as there is the cell at F1 that meets a condition. Otherwise, the user equipment may perform detection on F2.

Scheme 3: when the user equipment can not determine a TA to which Cell 2 belongs, the user equipment assigns values in accordance with large ones of frequency priority levels of the slice group in TA2 and frequency priority levels of the slice group in TA3. For example, the priority level of the first slice group at F1 is set as 6, and the priority level of the first slice group at F2 is set as 3. At this time, the priority level at F1 is higher, so the user equipment may camp on a cell at F1 as long as there is the cell at F1 that meets a condition. Otherwise, the user equipment may perform detection on F2.

In conclusion, in the embodiments of the present disclosure, the user equipment obtains in advance at least one of the information of the slice group supported by the serving TA, the information of the slice group supported by the at least two TAs in the registration area RA, the information of the slice group supported by the at least one neighboring TA of the RA, the information of the serving cell slice group supported by the neighboring cell, or the information of the slice group supported by the neighboring cell, and performs the cell reselection in accordance with the obtained slice group information and the slice group priority information in the case that the cell reselection needs to be performed, solving the problem that cell reselection can not be performed which is caused by the fact that slice groups have different definitions in different TAs and the user equipment can not obtain information of slice groups of other TA.

As shown in Fig. 6, the present disclosure further provides in some embodiments a method for slice group information processing, which includes following step.

Step 501 includes transmitting, by a network side device, slice group information to a user equipment, where the slice group information is used to indicate a mapping relationship between slices and slice groups.

The slice group information includes at least one of: information of a slice group supported by a serving tracking area TA, information of a slice group supported by at least two TAs in a registration area RA, information of a slice group supported by at least one neighboring TA of an RA, information of a serving cell slice group supported by a neighboring cell of a serving cell, or information of a slice group supported by a neighboring cell of a serving cell.

In a possible embodiment of the present disclosure, as shown in Fig. 3, the serving TA for the user equipment is TA0, the RA for the user equipment is RA1, and the at least one neighboring TA of the RA for the user equipment is TA3. The slice group information obtained by the user equipment includes at least one of: information about slice group 0 supported by TA0, information about slice group 1 supported by TA1 in RA1, information about slice group 2 supported by TA2 in RA1, or information about slice group 3 supported by TA3.

In a possible embodiment of the present disclosure, as shown in Fig. 4, the serving cell for the user equipment is Cell 1, and the neighboring cell is Cell 2; the slice group information obtained by the user equipment includes: information of a slice group supported by Cell 2 (in the case that the definition of slice group for the neighboring cell is consistent with that for the serving cell), or information of a slice group of Cell 1 supported by Cell 2 (in the case that the definition of slice group for the neighboring cell is inconsistent with that for the serving cell).

In at least one embodiment of the present disclosure, step 501 includes: transmitting, by the network side device, a registration accept message to the user equipment in accordance with a registration request message from the user equipment, where the registration accept message carries the slice group information. In other words, the user equipment obtains the slice group information during the registration.

In a possible embodiment of the present disclosure, the network side device is a core network network element, e.g., AMF. For example, the network side device transmits the registration accept message to the user equipment, and the registration accept message carries the slice group information, which includes at least one of:
information of a slice group of a current tracking area (TA), including a mapping relationship between slices and slice groups; as shown in Fig. 3, when the user equipment is located in TA0 and the registration is performed in TA0, information of slice groups of the current TA is transmitted by the AMF;
information of a slice group of parts of, or all of, TAs in a current registration area (RA), including a mapping relationship between slices and slice groups; as shown in Fig. 3, information of slice groups of all TAs in the entire RA, including TA0 to TA2, is transmitted by the AMF to the user equipment; or,
information of a slice group of a neighboring TA of the current RA, e.g., information of slice groups of TA3; in a possible embodiment of the present disclosure, the AMF may determine, in accordance with a movement trajectory of the user equipment or network information or user equipment historical information (including information about RA/TA where the user equipment camped), a neighboring TA whose slice group information is to be transmitted to the user equipment.

In another possible embodiment of the present disclosure, step 501 includes: transmitting, by the network side device, a broadcast message, where the broadcast message carries the slice group information.

In a possible embodiment of the present disclosure, the network side device is the serving cell for the user equipment. In other words, the serving cell obtains information of a slice or information of a slice group supported by the neighboring cell, and maps the information of the slice to information of a slice group of the serving cell, or remaps the information of the slice group to information of a slice group of the serving cell in the case that the definition of slice group for the neighboring cell is inconsistent with that for the serving cell, or determines the information of the slice group supported by the neighboring cell in the case that the definition of slice group for the neighboring cell is consistent with that for the serving cell. Further, the serving cell transmits the broadcast message, and the broadcast message carries the slice group information obtained through mapping or remapping.

In a possible embodiment of the present disclosure, in the case that the slice group information includes the information of the serving cell slice group supported by the neighboring cell of the serving cell, the method for slice group information processing further includes:
obtaining, by the network side device, information of a slice supported by the neighboring cell or information of a neighboring cell slice group supported by the neighboring cell, through an Xn interface or an NG interface; and
mapping, by the network side device, the information of the slice supported by the neighboring cell to a serving cell slice group so as to obtain the information of the serving cell slice group supported by the neighboring cell, or, remapping, by the network side device, the information of the neighboring cell slice group supported by the neighboring cell so as to obtain the information of the serving cell slice group supported by the neighboring cell.

In a possible embodiment of the present disclosure, the information of the slice supported by the neighboring cell or the information of the neighboring cell slice group supported by the neighboring cell is obtained through the Xn interface, which includes obtaining the information of the slice supported by the neighboring cell or the information of the neighboring cell slice group supported by the neighboring cell through an Xn establishment process and an RAN node reconfiguration update process.

In a possible embodiment of the present disclosure, the information of the slice supported by the neighboring cell or the information of the neighboring cell slice group supported by the neighboring cell is obtained through a core network, which includes obtaining the information of the slice supported by the neighboring cell or the information of the neighboring cell slice group supported by the neighboring cell through an NG (an interface between the RAN and the AMF) establishment process.

For example, as shown in Fig. 4, the serving cell for the user equipment is Cell 1, and the neighboring cell is Cell 2. It is assumed that slice groups supported by Cell 1 include slice group 1 (slice 1 and slice 2) and slice group 2 (slice 4 and slice 5), and slices supported by Cell 2 and obtained by Cell 1 include slice 1, slice 2 and slice 3. At this time, Cell 1 may map slice 1 and slice 2 supported by Cell 2 to slice group 1 supported by Cell 1. The serving cell notifies, through the broadcast message, that Cell 2 supports slice group 1, where Slice group 1 is defined in accordance with Cell 1, and Cell 1 and Cell 2 belong to different TAs.

For another example, as shown in Fig. 4, the serving cell for the user equipment is Cell 1, and the neighboring cell is Cell 2. It is assumed that slice groups supported by Cell 1 include slice group 1 (slice 1 and slice 2) and slice group 2 (slice 4 and slice 5), and information of slice groups supported by Cell 2 and obtained by Cell 1 includes slice group 3 (slice 1, slice 2 and slice 3). At this time, Cell 1 may map slice group 3 supported by Cell 2 to slice group 1 supported by Cell 1. The serving cell notifies, through the broadcast message, that Cell 2 supports slice group 1 of Cell 1.

In at least one embodiment of the present disclosure, the method for slice group information processing further includes: transmitting, by the network side device, a non-access stratum NAS message or a broadcast message to the user equipment, where the NAS message or the broadcast message carries slice group priority information for each TA, and the slice group priority information includes priority information about a slice group at each frequency.

In conclusion, in the embodiments of the present disclosure, the user equipment obtains in advance at least one of the information of the slice group supported by the serving TA, the information of the slice group supported by the at least two TAs in the registration area RA, the information of the slice group supported by the at least one neighboring TA of the RA, the information of the serving cell slice group supported by the neighboring cell, or the information of the slice group supported by the neighboring cell, and performs the cell reselection in accordance with the obtained slice group information and the slice group priority information in the case that the cell reselection needs to be performed, solving the problem that cell reselection can not be performed which is caused by the fact that slice groups have different definitions in different TAs and the user equipment can not obtain information of slice groups of other TA.

In order to describe the method for cell selection in the embodiments of the present disclosure in a clearer manner, the following description will be given in conjunction with an example.

In a third example, the user equipment performs the cell reselection in accordance with the obtained slice group information.

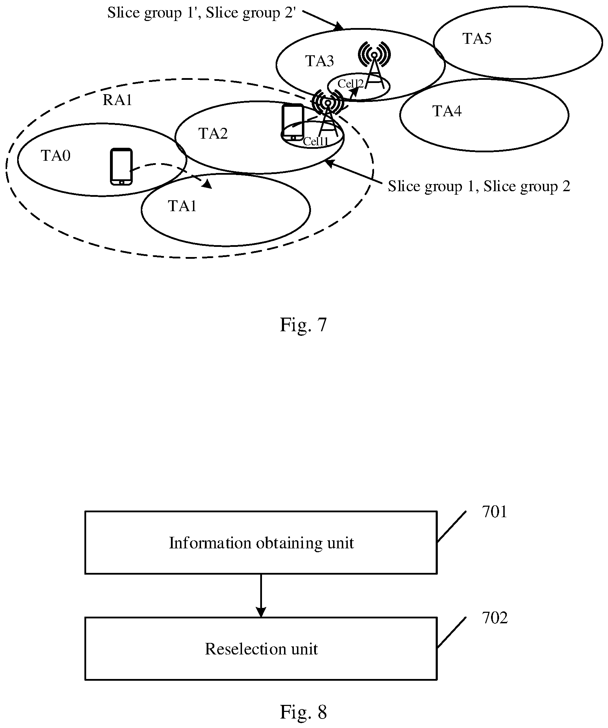

As shown in Fig. 7, when the user equipment performs the registration in RA1, it obtains and stores information of slice groups of a neighboring TA3. It is assumed that the user equipment currently camps on Cell 1, Cell 1 is located in TA2, and TA2 belongs to RA1. When the user equipment moves to a boundary of TA2, it may obtain adjacent-frequency information around it through measurement. When a criterion S on Cell 1 is not met or the user equipment in a connected state enters an idle state or inactive state, e.g., when signal quality on Cell 1 is smaller than a predetermined threshold, the user equipment performs the cell reselection.

The user equipment determines the stored slice group information, the slice group priority information (obtained by the user equipment through the broadcast message or NAS message), and the information of the slice group supported by the neighboring cell or the information of the serving cell slice group supported by the neighboring cell. When the neighboring cell and the serving cell belong to different TAs, the serving cell further needs to notify the information of the slice groups of the serving cell supported by the neighboring cell.

For example, the slice group information is described as follows.

In TA2, slices corresponding to slice group 1 include slice A and slice B, and slices corresponding to slice group 2 include slice E and slice F; and

in TA3, slices corresponding to slice group 1' include slice E, slice F and slice G, and slices corresponding to slice group 2 include slice A, slice B and slice C.

The slice group priority information is described as follows.

Priority levels on TA2 are shown in Table 1:

**Table 1**

| | F1 | F2 |
|---|---|---|
| Slice group 1 | 5 | 3 |
| Slice group 2 | 4 | 1 |

Priority levels on TA3 are shown in Table 2:

**Table 2**

| | F1 | F2 |
|---|---|---|
| Slice group 1' | 4 | 2 |
| Slice group 2' | 6 | 3 |

When the definition of slice group for the neighboring cell is consistent with that for the serving cell, the broadcast message includes that the information of the slice group supported by Cell 2 includes slice group 1 (it may not be needed to determine whether slice group 1 is for Cell 1 or Cell 2).

When the definition of slice group for the neighboring cell is inconsistent with that for the serving cell, the broadcast message includes that Cell 2 supports slice group 1 of Cell 1 (which actually corresponds to slice group 2' of Cell 2), and frequency priority levels of slice group 1 on different TAs.

The user equipment performs the cell reselection in accordance with the priority levels of the slice group on different TAs.

For example, as shown in Table 1, the user equipment may determine that the priority level of slice group 1 in TA1 at F1 is 5, and as shown in Table 2, the priority level of slice group 1 (corresponding to slice group 2') in TA2 at F1 is 6 (a part marked in yellow). The user equipment may perform subsequent cell reselection by taking the two priority levels of slice group 1 into consideration.

In the embodiments of the present disclosure, the user equipment obtains in advance at least one of the information of the slice group supported by the serving TA, the information of the slice group supported by the at least two TAs in the registration area RA, the information of the slice group supported by the at least one neighboring TA of the RA, the information of the serving cell slice group supported by the neighboring cell, or the information of the slice group supported by the neighboring cell, and performs the cell reselection in accordance with the obtained slice group information and the slice group priority information in the case that the cell reselection needs to be performed, solving the problem that cell reselection can not be performed which is caused by the fact that slice groups have different definitions in different TAs and the user equipment can not obtain information of slice groups of other TA.

As shown in Fig. 8, the present disclosure further provides in some embodiments a device for cell reselection, which includes:
an information obtaining unit 701, configured to obtain slice group information, where the slice group information is used to indicate a mapping relationship between slices and slice groups; and
a reselection unit 702, configured to perform cell reselection in accordance with the slice group information;
The slice group information includes at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell, or information of a slice group supported by a neighboring cell.

In a possible embodiment of the present disclosure, the information obtaining unit includes: a first obtaining sub-unit configured to receive a registration accept message from a network side device, where the registration accept message carries the slice group information.

In a possible embodiment of the present disclosure, the information obtaining unit includes: a second obtaining sub-unit configured to receive a broadcast message from a network side device, where the broadcast message carries the slice group information.

In a possible embodiment of the present disclosure, the reselection unit includes: a reselection sub-unit configured to perform the cell reselection in accordance with the slice group information and slice group priority information.

In a possible embodiment of the present disclosure, the device for cell reselection further includes: a message reception unit configured to receive a non-access stratum NAS message or a broadcast message, where the NAS message or the broadcast message carries slice group priority information for each TA, and the slice group priority information includes priority information about a slice group at each frequency.

In a possible embodiment of the present disclosure, the reselection sub-unit includes:
a first sub-unit configured to select a first slice group including a first slice that is supported by a user equipment and has a highest priority level, from information of a slice group supported by a TA to which a neighboring cell belongs, information of a serving cell slice group supported by a neighboring cell or information of a slice group supported by a neighboring cell, in accordance with the first slice; and
a second sub-unit configured to perform measurement in accordance with the first slice group and perform the cell reselection in accordance with a measurement result.

In a possible embodiment of the present disclosure, the device for cell reselection further includes: a first determination sub-unit configured to determine priority information about the first slice group at each frequency.

In a possible embodiment of the present disclosure, the second sub-unit is further configured to:
perform the measurement at a frequency with a highest priority level, in accordance with a priority level of the first slice group at each frequency, and perform the cell reselection in accordance with the measurement result;
in a case that there is no cell meeting a condition at the frequency with the highest priority level, perform the measurement at corresponding frequencies in a descending order of priority levels until the cell reselection is completed.

In a possible embodiment of the present disclosure, the first determination sub-unit is further configured to: assign a value to a priority level of the first slice group at each frequency, in accordance with slice group priority information for the TA to which the neighboring cell belongs, or slice group priority information for the serving TA, or highest-priority information from the slice group priority information for the TA to which the neighboring cell belongs and the slice group priority information for the serving TA.

In the embodiments of the present disclosure, the user equipment obtains in advance at least one of the information of the slice group supported by the serving TA, the information of the slice group supported by the at least two TAs in the registration area RA, the information of the slice group supported by the at least one neighboring TA of the RA, the information of the serving cell slice group supported by the neighboring cell, or the information of the slice group supported by the neighboring cell, and performs the cell reselection in accordance with the obtained slice group information and the slice group priority information in the case that the cell reselection needs to be performed, solving the problem that cell reselection can not be performed which is caused by the fact that slice groups have different definitions in different TAs and the user equipment can not obtain information of slice groups of other TA.

The method and the device are based on the same application concept. Since the principles of solving problems in the method and the device are similar, reference may be made to each other for implementations of the device and the method, the repetition of which is not provided again herein.

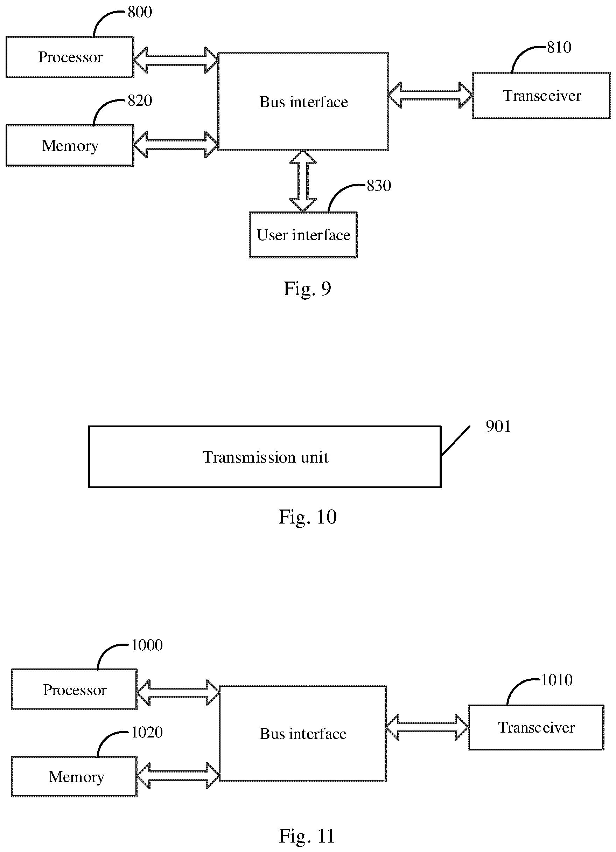

As shown in Fig. 9, the present disclosure further provides in some embodiments a user equipment, which includes a memory 820, a transceiver 810 and a processor 800. The memory 820 is configured to store therein a computer program, and the transceiver 810 is configured to transmit and receive data under the control of the processor 800. The processor 800 is configured to read the computer program in the memory 820 to perform following operation:
obtaining slice group information, where the slice group information is used to indicate a mapping relationship between slices and slice groups; and
performing, by the user equipment, cell reselection in accordance with the slice group information;

The slice group information includes at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell, or information of a slice group supported by a neighboring cell.

In a possible embodiment of the present disclosure, the processor is further configured to read the computer program in the memory to perform following operation: receiving a registration accept message from a network side device, where the registration accept message carries the slice group information.

In a possible embodiment of the present disclosure, the processor is further configured to read the computer program in the memory to perform following operation: receiving a broadcast message from a network side device, where the broadcast message carries the slice group information.

In a possible embodiment of the present disclosure, the processor is further configured to read the computer program in the memory to perform following operation: performing the cell reselection in accordance with the slice group information and slice group priority information.

In a possible embodiment of the present disclosure, the processor is further configured to read the computer program in the memory to perform following operation: receiving a non-access stratum NAS message or a broadcast message, where the NAS message or the broadcast message carries slice group priority information for each TA, and the slice group priority information includes priority information about a slice group at each frequency.

In a possible embodiment of the present disclosure, the processor is further configured to read the computer program in the memory, so as to:
selecting a first slice group including a first slice that is supported by the user equipment and has a highest priority level, from information of a slice group supported by a TA to which a neighboring cell belongs, information of a serving cell slice group supported by a neighboring cell or information of a slice group supported by a neighboring cell, in accordance with the first slice; and
performing measurement in accordance with the first slice group and performing the cell reselection in accordance with a measurement result.

In a possible embodiment of the present disclosure, the processor is further configured to read the computer program in the memory to perform following operation: determining priority information about the first slice group at each frequency.

In a possible embodiment of the present disclosure, the processor is further configured to read the computer program in the memory to perform following operation:
performing the measurement at a frequency with a highest priority level, in accordance with a priority level of the first slice group at each frequency, and performing the cell reselection in accordance with the measurement result; and
in a case that there is no cell meeting a condition at the frequency with the highest priority level, performing the measurement at corresponding frequencies in a descending order of priority levels until the cell reselection is completed.

In a possible embodiment of the present disclosure, the processor is further configured to read the computer program in the memory to perform following operation: assigning a value to a priority level of the first slice group at each frequency, in accordance with slice group priority information for the TA to which the neighboring cell belongs, or slice group priority information for the serving TA, or highest-priority information from slice group priority information for the TA to which the neighboring cell belongs and slice group priority information for the serving TA.

In FIG. 9, a bus architecture may include any quantity of interconnected buses and bridges. Various circuits including one or more processors represented by the processor 800 and a memory represented by the memory 820 are linked. The bus architecture may further link various other circuits together, such as a periphery component, a voltage stabilizer and a power management circuit, which are known in the art and are not further described herein. A bus interface provides an interface. The transceiver 810 may be multiple elements, i.e., including a transmitter and a receiver, providing a unit for communicating with various other devices on transmission media. The transmission media include a wireless channel, a wired channel, an optical cable, or other transmission media. For different user equipments, the user interface 830 may be an interface capable of connecting externally and internally with the required equipment. The connected equipment includes but not limited to a keypad, a display, a speaker, a microphone, a joystick, etc.

The processor 800 is in charge of managing the bus architecture and common processes. The memory 820 may store data used by the processor 800 in performing operations.

In a possible embodiment of the present disclosure, the processor 800 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

The processor is configured to execute any of the methods in the embodiments of the present application according to obtained executable instructions by calling the program instructions stored in the memory. The processor and the memory may be physically arranged separately.

In the embodiments of the present disclosure, the user equipment obtains in advance at least one of the information of the slice group supported by the serving TA, the information of the slice group supported by the at least two TAs in the registration area RA, the information of the slice group supported by the at least one neighboring TA of the RA, the information of the serving cell slice group supported by the neighboring cell, or the information of the slice group supported by the neighboring cell, and performs the cell reselection in accordance with the obtained slice group information and the slice group priority information in the case that the cell reselection needs to be performed, solving the problem that cell reselection can not be performed which is caused by the fact that slice groups have different definitions in different TAs and the user equipment can not obtain information of slice groups of other TA.

A principle of the user equipment for solving the problem is similar to that of the above-mentioned method for cell reselection, so the implementation of the user equipment may refer to that of the method for cell reselection, which will not be particularly defined herein.

As shown in Fig. 10, the present disclosure further provides in some embodiments a device for slice group information processing, which includes:
a transmission unit 901, configured to transmit slice group information to a user equipment, where the slice group information is used to indicate a mapping relationship between slices and slice groups.

The slice group information includes at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell of a serving cell, or information of a slice group supported by a neighboring cell of a serving cell.

In a possible embodiment of the present disclosure, the transmission unit includes: a first transmission sub-unit configured to transmit a registration accept message to the user equipment in accordance with a registration request message from the user equipment, where the registration accept message carries the slice group information.

In a possible embodiment of the present disclosure, the transmission unit includes: a second transmission sub-unit configured to transmit a broadcast message, where the broadcast message carries the slice group information.

In a possible embodiment of the present disclosure, in the case that the slice group information includes the information of the serving cell slice group supported by the neighboring cell of the serving cell, the device for slice group information processing further includes:
a slice information obtaining unit, configured to obtain information of a slice supported by the neighboring cell or information of a neighboring cell slice group supported by the neighboring cell, through an Xn interface or an NG interface; and
a mapping unit, configured to map the information of the slice supported by the neighboring cell to a serving cell slice group so as to obtain the information of the serving cell slice group supported by the neighboring cell, or remap the information of the neighboring cell slice group supported by the neighboring cell so as to obtain the information of the serving cell slice group supported by the neighboring cell.

In a possible embodiment of the present disclosure, the device for slice group information processing further includes:
a message transmission unit configured to transmit a non-access stratum NAS message or a broadcast message to the user equipment, where the NAS message or the broadcast message carries slice group priority information for each TA, and the slice group priority information includes priority information about a slice group at each frequency.

In the embodiments of the present disclosure, the user equipment obtains in advance at least one of the information of the slice group supported by the serving TA, the information of the slice group supported by the at least two TAs in the registration area RA, the information of the slice group supported by the at least one neighboring TA of the RA, the information of the serving cell slice group supported by the neighboring cell, or the information of the slice group supported by the neighboring cell, and performs the cell reselection in accordance with the obtained slice group information and the slice group priority information in the case that the cell reselection needs to be performed, solving the problem that cell reselection can not be performed which is caused by the fact that slice groups have different definitions in different TAs and the user equipment can not obtain information of slice groups of other TA.

The method and the device are based on the same application concept. Since the principles of solving problems in the method and the device are similar, reference may be made to each other for implementations of the device and the method, the repetition of which is not provided again herein.

As shown in Fig. 11, the present disclosure further provides in some embodiments a network side device, which includes a memory 1020, a transceiver 1010 and a processor 1000.

The memory 1020 is configured to store therein a computer program, the transceiver 1010 is configured to transmit and receive data under the control of the processor 1000, the processor 1000 is configured to read the computer program in the memory 1020 to perform following operation:
transmitting slice group information to a user equipment, where the slice group information is used to indicate a mapping relationship between slices and slice groups.

The slice group information includes at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell of a serving cell, or information of a slice group supported by a neighboring cell of a serving cell.

In a possible embodiment of the present disclosure, the processor is further configured to read the computer program in the memory to perform following operation: transmitting a registration accept message to the user equipment in accordance with a registration request message from the user equipment, where the registration accept message carries the slice group information.

In a possible embodiment of the present disclosure, the processor is further configured to read the computer program in the memory to perform following operation: transmitting a broadcast message, where the broadcast message carries the slice group information.

In a possible embodiment of the present disclosure, the processor is further configured to read the computer program in the memory to perform following operation:
in the case that the slice group information includes the information of the serving cell slice group supported by the neighboring cell of the serving cell, obtaining information of a slice supported by the neighboring cell or information of a neighboring cell slice group supported by the neighboring cell, through an Xn interface or an NG interface; and
mapping the information of the slice supported by the neighboring cell to a serving cell slice group so as to obtain the information of the serving cell slice group supported by the neighboring cell, or remapping the information of the neighboring cell slice group supported by the neighboring cell so as to obtain the information of the serving cell slice group supported by the neighboring cell.

In a possible embodiment of the present disclosure, the processor is further configured to read the computer program in the memory to perform following operation: transmitting a non-access stratum NAS message or a broadcast message to the user equipment, where the NAS message or the broadcast message carries slice group priority information for each TA, and the slice group priority information includes priority information about a slice group at each frequency.

In FIG. 11, a bus architecture may include any quantity of interconnected buses and bridges. Various circuits including one or more processors represented by the processor 1000 and a memory represented by the memory 1020 are linked. The bus architecture may further link various other circuits together, such as a periphery component, a voltage stabilizer and a power management circuit, which are known in the art and are not further described herein. A bus interface provides an interface. The transceiver 1010 may be multiple elements, i.e., including a transmitter and a receiver, providing a unit for communicating with various other devices on transmission media. The transmission media include a wireless channel, a wired channel, an optical cable, or other transmission media. The processor 1000 is in charge of managing the bus architecture and common processes. The memory 1020 may store data used by the processor 1000 in performing operations.

The processor 1000 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

In the embodiments of the present disclosure, the user equipment obtains in advance at least one of the information of the slice group supported by the serving TA, the information of the slice group supported by the at least two TAs in the registration area RA, the information of the slice group supported by the at least one neighboring TA of the RA, the information of the serving cell slice group supported by the neighboring cell, or the information of the slice group supported by the neighboring cell, and performs the cell reselection in accordance with the obtained slice group information and the slice group priority information in the case that the cell reselection needs to be performed, solving the problem that cell reselection can not be performed which is caused by the fact that slice groups have different definitions in different TAs and the user equipment can not obtain information of slice groups of other TA.

A principle of the network side device for solving the problem is similar to that of the above-mentioned method for slice group information processing, so the implementation of the network side device may refer to that of the method for slice group information processing, which will not be particularly defined herein.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

Embodiments of the present disclosure also provide a processor readable storage medium, where the processor readable storage medium stores a computer program used to cause a processor to execute the method for cell reselection or the method for slice group information processing. The processor readable storage medium may be any available medium or data storage device that the processor may access, including but not limited to a magnetic memory (such as a floppy disk, a hard disk, a magnetic tape, a magneto-optical disk (MO), etc.), an optical memory (such as a CD, a DVD, a BD, a HVD, etc.), or a semiconductor memory (such as a ROM, an EPROM, an EEPROM, a non-volatile memory (NAND FLASH), a solid-state drive (SSD), etc.).

A person skilled in the art should understand that the embodiments of the present disclosure may be provided as methods, systems, or computer program products. Therefore, the present disclosure may adopt the form of complete hardware embodiments, complete software embodiments, or embodiments combining software and hardware aspects. Moreover, the present disclosure may adopt the form of a computer program product implemented on one or more computer available storage media (including but not limited to a disk storage, an optical storage, etc.) containing computer available program code.

The present disclosure is described with reference to flowcharts and/or block diagrams of methods, devices (systems), and computer program products according to the embodiments of the present disclosure. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determining module may be a separate processing element, or may be integrated into a certain chip of the above device, or, may be stored in the memory of the above device in the form of program code, and a certain processing element of the above device may call and execute the functions of the determining module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Apparently, those skilled in the art may make various modifications and variations to the present disclosure, without departing from the spirit and scope of the present disclosure. In this case, if the modifications and variations of the present disclosure fall within the scope of the claims of the present disclosure and their equivalent techniques, the present disclosure is intended to include these modifications and variations.

## Claims

1. A method for cell reselection, comprising:
obtaining, by a user equipment, slice group information, wherein the slice group information is used to indicate a mapping relationship between slices and slice groups; and
performing, by the user equipment, cell reselection in accordance with the slice group information;
wherein the slice group information comprises at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell, or information of a slice group supported by a neighboring cell.

2. The method for cell reselection according to claim 1, wherein the obtaining, by the user equipment, the slice group information comprises: receiving, by the user equipment, a registration accept message from a network side device, wherein the registration accept message carries the slice group information.

3. The method for cell reselection according to claim 1, wherein the obtaining, by the user equipment, the slice group information comprises: receiving, by the user equipment, a broadcast message from a network side device, wherein the broadcast message carries the slice group information.

4. The method for cell reselection according to claim 1, wherein the performing, by the user equipment, the cell reselection in accordance with the slice group information comprises: performing, by the user equipment, the cell reselection in accordance with the slice group information and slice group priority information.

5. The method for cell reselection according to claim 4, further comprising: receiving, by the user equipment, a non-access stratum (NAS) message or a broadcast message, wherein the NAS message or the broadcast message carries slice group priority information for each TA, and the slice group priority information comprises priority information about a slice group at each frequency.

6. The method for cell reselection according to claim 5, wherein the performing, by the user equipment, the cell reselection in accordance with the slice group information and the slice group priority information comprises:
selecting, by the user equipment, a first slice group comprising a first slice that is supported by the user equipment and has a highest priority level, from information of a slice group supported by a TA to which a neighboring cell belongs, information of a serving cell slice group supported by a neighboring cell or information of a slice group supported by a neighboring cell, in accordance with the first slice; and
performing, by the user equipment, measurement in accordance with the first slice group and performing the cell reselection in accordance with a measurement result.

7. The method for cell reselection according to claim 6, wherein before the performing, by the user equipment, the measurement in accordance with the first slice group and performing the cell reselection in accordance with the measurement result, the method for cell reselection further comprises: determining, by the user equipment, priority information about the first slice group at each frequency.

8. The method for cell reselection according to claim 7, wherein the performing, by the user equipment, the measurement in accordance with the first slice group and performing the cell reselection in accordance with the measurement result comprises:
performing, by the user equipment, the measurement at a frequency with a highest priority level, in accordance with a priority level of the first slice group at each frequency, and performing the cell reselection in accordance with the measurement result; and
in a case that there is no cell meeting a condition at the frequency with the highest priority level, performing the measurement at corresponding frequencies in a descending order of priority levels until the cell reselection is completed.

9. The method for cell reselection according to claim 7, wherein the determining, by the user equipment, the priority information about the first slice group at each frequency comprises: assigning, by the user equipment, a value to a priority level of the first slice group at each frequency, in accordance with slice group priority information for the TA to which the neighboring cell belongs, or slice group priority information for the serving TA, or highest-priority information from slice group priority information for the TA to which the neighboring cell belongs and slice group priority information for the serving TA.

10. A method for slice group information processing, comprising:
transmitting, by a network side device, slice group information to a user equipment, wherein the slice group information is used to indicate a mapping relationship between slices and slice groups;
wherein the slice group information comprises at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell of a serving cell, or information of a slice group supported by a neighboring cell of a serving cell.

11. The method for slice group information processing according to claim 10, wherein the transmitting, by the network side device, the slice group information to the user equipment comprises: transmitting, by the network side device, a registration accept message to the user equipment in accordance with a registration request message from the user equipment, wherein the registration accept message carries the slice group information.

12. The method for slice group information processing according to claim 10, wherein the transmitting, by the network side device, the slice group information to the user equipment comprises: transmitting, by the network side device, a broadcast message, wherein the broadcast message carries the slice group information.

13. The method for slice group information processing according to claim 10, wherein in the case that the slice group information comprises the information of the serving cell slice group supported by the neighboring cell of the serving cell, the method for slice group information processing further comprises:
obtaining, by the network side device, information of a slice supported by the neighboring cell or information of a neighboring cell slice group supported by the neighboring cell, through an Xn interface or an NG interface; and
mapping, by the network side device, the information of the slice supported by the neighboring cell to a serving cell slice group so as to obtain the information of the serving cell slice group supported by the neighboring cell, or, remapping, by the network side device, the information of the neighboring cell slice group supported by the neighboring cell so as to obtain the information of the serving cell slice group supported by the neighboring cell.

14. The method for slice group information processing according to claim 10, further comprising: transmitting, by the network side device, a non-access stratum (NAS) message or a broadcast message to the user equipment, wherein the NAS message or the broadcast message carries slice group priority information for each TA, and the slice group priority information comprises priority information about a slice group at each frequency.

15. A device for cell reselection, comprising:
an information obtaining unit, configured to obtain slice group information, wherein the slice group information is used to indicate a mapping relationship between slices and slice groups; and
a reselection unit, configured to perform cell reselection in accordance with the slice group information;
wherein the slice group information comprises at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell, or information of a slice group supported by a neighboring cell.

16. The device for cell reselection according to claim 15, wherein the information obtaining unit comprises: a first obtaining sub-unit configured to receive a registration accept message from a network side device, wherein the registration accept message carries the slice group information.

17. The device for cell reselection according to claim 15, wherein the information obtaining unit comprises: a second obtaining sub-unit configured to receive a broadcast message from a network side device, wherein the broadcast message carries the slice group information.

18. The device for cell reselection according to claim 15, wherein the reselection unit comprises: a reselection sub-unit configured to perform the cell reselection in accordance with the slice group information and slice group priority information.

19. The device for cell reselection according to claim 18, further comprising: a message reception unit configured to receive a non-access stratum (NAS) message or a broadcast message, wherein the NAS message or the broadcast message carries slice group priority information for each TA, and the slice group priority information comprises priority information about a slice group at each frequency.

20. The device for cell reselection according to claim 19, wherein the reselection sub-unit comprises:
a first sub-unit configured to select a first slice group comprising a first slice that is supported by a user equipment and has a highest priority level, from information of a slice group supported by a TA to which a neighboring cell belongs, information of a serving cell slice group supported by a neighboring cell or information of a slice group supported by a neighboring cell, in accordance with the first slice; and
a second sub-unit configured to perform measurement in accordance with the first slice group and perform the cell reselection in accordance with a measurement result.

21. The device for cell reselection according to claim 20, further comprising: a first determination sub-unit configured to determine priority information about the first slice group at each frequency.

22. The device for cell reselection according to claim 21, wherein the second sub-unit is further configured to:
perform the measurement at a frequency with a highest priority level, in accordance with a priority level of the first slice group at each frequency, and perform the cell reselection in accordance with the measurement result; and
in a case that there is no cell meeting a condition at the frequency with the highest priority level, perform the measurement at corresponding frequencies in a descending order of priority levels until the cell reselection is completed.

23. The device for cell reselection according to claim 21, wherein the first determination sub-unit is further configured to: assign a value to a priority level of the first slice group at each frequency, in accordance with slice group priority information for the TA to which the neighboring cell belongs, or slice group priority information for the serving TA, or highest-priority information from the slice group priority information for the TA to which the neighboring cell belongs and the slice group priority information for the serving TA.

24. A user equipment, comprising a memory, a transceiver and a processor;
wherein the memory is configured to store a computer program, and the transceiver is configured to transmit and receive data under control of the processor;
wherein the processor is configured to read the computer program in the memory to perform following operation:
obtaining slice group information, wherein the slice group information is used to indicate a mapping relationship between slices and slice groups; and
performing cell reselection in accordance with slice group priority information and the obtained slice group information;
wherein the slice group information comprises at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell, or information of a slice group supported by a neighboring cell.

25. The user equipment according to claim 24, wherein the processor is further configured to read the computer program in the memory to perform following operation: receiving a registration accept message from a network side device, wherein the registration accept message carries the slice group information.

26. The user equipment according to claim 24, wherein the processor is further configured to read the computer program in the memory to perform following operation: receiving a broadcast message from a network side device, wherein the broadcast message carries the slice group information.

27. The user equipment according to claim 24, wherein the processor is further configured to read the computer program in the memory to perform following operation: performing the cell reselection in accordance with the slice group information and slice group priority information.

28. The user equipment according to claim 27, wherein the processor is further configured to read the computer program in the memory to perform following operation: receiving a non-access stratum (NAS) message or a broadcast message, wherein the NAS message or the broadcast message carries slice group priority information for each TA, and the slice group priority information comprises priority information about a slice group at each frequency.

29. The user equipment according to claim 28, wherein the processor is further configured to read the computer program in the memory to perform following operation:
selecting a first slice group comprising a first slice that is supported by the user equipment and has a highest priority level, from information of a slice group supported by a TA to which a neighboring cell belongs, information of a serving cell slice group supported by a neighboring cell or information of a slice group supported by a neighboring cell, in accordance with the first slice; and
performing measurement in accordance with the first slice group and performing the cell reselection in accordance with a measurement result.

30. The user equipment according to claim 29, wherein the processor is further configured to read the computer program in the memory to perform following operation: determining priority information about the first slice group at each frequency.

31. The user equipment according to claim 30, wherein the processor is further configured to read the computer program in the memory to perform following operation:
performing the measurement at a frequency with a highest priority level, in accordance with a priority level of the first slice group at each frequency, and performing the cell reselection in accordance with the measurement result; and
in a case that there is no cell meeting a condition at the frequency with the highest priority level, performing the measurement at corresponding frequencies in a descending order of priority levels until the cell reselection is completed.

32. The user equipment according to claim 30, wherein the processor is further configured to read the computer program in the memory to perform following operation: assigning a value to a priority level of the first slice group at each frequency, in accordance with slice group priority information for the TA to which the neighboring cell belongs, or slice group priority information for the serving TA, or highest-priority information from slice group priority information for the TA to which the neighboring cell belongs and slice group priority information for the serving TA.

33. A device for slice group information processing, comprising:
a transmission unit, configured to transmit slice group information to a user equipment, wherein the slice group information is used to indicate a mapping relationship between slices and slice groups;
wherein the slice group information comprises at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell of a serving cell, or information of a slice group supported by a neighboring cell of a serving cell.

34. The device for slice group information processing according to claim 33, wherein the transmission unit comprises: a first transmission sub-unit configured to transmit a registration accept message to the user equipment in accordance with a registration request message from the user equipment, wherein the registration accept message carries the slice group information.

35. The device for slice group information processing according to claim 33, wherein the transmission unit comprises: a second transmission sub-unit configured to transmit a broadcast message, wherein the broadcast message carries the slice group information.

36. The device for slice group information processing according to claim 33, wherein in the case that the slice group information comprises the information of the serving cell slice group supported by the neighboring cell of the serving cell, the device for slice group information processing further comprises:
a slice information obtaining unit, configured to obtain information of a slice supported by the neighboring cell or information of a neighboring cell slice group supported by the neighboring cell, through an Xn interface or an NG interface; and
a mapping unit, configured to map the information of the slice supported by the neighboring cell to a serving cell slice group so as to obtain the information of the serving cell slice group supported by the neighboring cell, or remap the information of the neighboring cell slice group supported by the neighboring cell so as to obtain the information of the serving cell slice group supported by the neighboring cell.

37. The device for slice group information processing according to claim 33, further comprising: a message transmission unit configured to transmit a non-access stratum (NAS) message or a broadcast message to the user equipment, wherein the NAS message or the broadcast message carries slice group priority information for each TA, and the slice group priority information comprises priority information about a slice group at each frequency.

38. A network side device, comprising a memory, a transceiver and a processor, wherein the memory is configured to store a computer program, and the transceiver is configured to transmit and receive data under control of the processor;
wherein the processor is configured to read the computer program in the memory to perform following operation:
transmitting slice group information to a user equipment, wherein the slice group information is used to indicate a mapping relationship between slices and slice groups;
wherein the slice group information comprises at least one of: information of a slice group supported by a serving tracking area (TA), information of a slice group supported by at least two TAs in a registration area (RA), information of a slice group supported by at least one neighboring TA of an RA, information of a serving cell slice group supported by a neighboring cell of a serving cell, or information of a slice group supported by a neighboring cell of a serving cell.

39. The network side device according to claim 38, wherein the processor is further configured to read the computer program in the memory to perform following operation: transmitting a registration accept message to the user equipment in accordance with a registration request message from the user equipment, wherein the registration accept message carries the slice group information.

40. The network side device according to claim 38, wherein the processor is further configured to read the computer program in the memory to perform following operation: transmitting a broadcast message, wherein the broadcast message carries the slice group information.

41. The network side device according to claim 38, wherein the processor is further configured to read the computer program in the memory to perform following operation:
in the case that the slice group information comprises the information of the serving cell slice group supported by the neighboring cell of the serving cell, obtaining information of a slice supported by the neighboring cell or information of a neighboring cell slice group supported by the neighboring cell, through an Xn interface or an NG interface; and
mapping the information of the slice supported by the neighboring cell to a serving cell slice group so as to obtain the information of the serving cell slice group supported by the neighboring cell, or remapping the information of the neighboring cell slice group supported by the neighboring cell so as to obtain the information of the serving cell slice group supported by the neighboring cell.

42. The network side device according to claim 38, wherein the processor is further configured to read the computer program in the memory to perform following operation: transmitting a non-access stratum (NAS) message or a broadcast message to the user equipment, wherein the NAS message or the broadcast message carries slice group priority information for each TA, and the slice group priority information comprises priority information about a slice group at each frequency.

43. A processor readable storage medium, having a computer program stored thereon, wherein the computer program is executed by a processor to implement the method for cell reselection according to any one of claims 1 to 9, or to implement the method for slice group information processing according to any one of claims 10 to 14.
